# EUROPÄISCHE PATENTANMELDUNG

(11) **EP 1 091 545 A2**
(43) Veröffentlichungstag der Anmeldung: **11.04.2001**
(21) Anmeldenummer: 00120873.5
(22) Anmeldetag: 25.09.2000
(51) Int. Cl.: H04M 3/42, H04M 1/00

(54) **Verfahren zum Anschliessen eines Endgerätes an eine Telekommunikationsanlage**

(30) Priorität: 06.10.1999 DE 19948090
(71) Anmelder: SIEMENS AKTIENGESELLSCHAFT, 80333 München (DE)
(72) Erfinder: Schoenfeld, Norbert, 44145 Dortmund (DE); Zimmermann, Werner, Dr., 58708 Menden (DE)

(57) **Zusammenfassung**

Erläutert wird ein Verfahren zum Anschließen eines Endgerätes an eine Telekommunikationsanlage, bei dem ein Endgerät mindestens ein Anzeigeelement zum Anzeigen der Zustände einer Bedienfunktion hat. Die zum Anzeigeelement gehörende Bedienfunktion ist im Endgerät vermerkt. Das Endgerät wird an eine Telekommunikationsanlage angeschlossen (Schritt 102). Danach wird die zum Anzeigeelement gehörende Bedienfunktion an die Telekommunikationsanlage übermittelt und dort gespeichert (Schritte 104 und 106).

## Beschreibung

Die Erfindung betrifft ein Verfahren zum Anschließen eines Endgerätes an eine Telekommunikationsanlage, bei dem ein Endgerät mindestens ein Anzeigeelement zum Anzeigen der Zustände einer Bedienfunktion hat. Das Endgerät wird an eine Telekommunikationsanlage zum Vermitteln von Verbindungen zwischen Teilnehmern in einem durchschaltevermittelten Telekommunikationsnetz angeschlossen.

Als Telekommunikationsanlage wird beispielsweise die Telekommunikationsanlage HICOM der Firma SIEMENS AG verwendet. Die Telekommunikationsanlage wird an einem öffentlichen Telekommunikationsnetz angeschlossen und dient der gebührenfreien Vermittlung von Gesprächen im Privatgelände des Betreibers der Telekommunikationsanlage. An die Telekommunikationsanlage werden Endgeräte angeschlossen, die für die durchschaltevermittelte Sprachübertragung geeignet sind. Beispielsweise wird an der oben genannten Telekommunikationsanlage ein Endgerät vom Typ OPTISET angeschlossen. Das Endgerät hat neben den Wähltasten für die Ziffern Null bis Neun auch eine Anzahl von Funktionstasten. Den Funktionstasten sind Rufnummern anderer Teilnehmer der Telekommunikationsanlage zugeordnet. Zur Anzeige bestimmter Zustände sind die Funktionstasten mit Anzeigeelementen versehen, z.B. mit Leuchtdioden verschiedener Farben. Bei anderen Endgeräten sind die Anzeigeelemente jeweils neben einer Funktionstaste angeordnet.

Ist der Funktionstaste eine Rufnummer eines an der Telekommunikationsanlage angeschlossenen anderen Teilnehmers zugeordnet, so wird mit Hilfe des zu dieser Funktionstaste gehörenden Anzeigeelementes angezeigt, in welchem Zustand sich das Endgerät dieses Teilnehmers befindet. Beispielsweise wird durch ein ausgeschaltetes Anzeigeelement angezeigt, daß das Endgerät frei ist. Ein eingeschaltetes Anzeigeelement bedeutet, daß das Endgerät gerade benutzt wird und somit besetzt ist. Ein blinkendes Anzeigeelement weist darauf hin, daß der entsprechende Teilnehmer gerade von einem anderen Teilnehmer gerufen wird. Ebenso gibt es Funktionstasten, die Zugangsleitungen zwischen der Telekommunikationsanlage und einer Vermittlungsstelle zugeordnet sind. Bisher wird die Belegung der Funktionstasten mit Hilfe eines Wartungsrechners oder vom jeweiligen Endgerät aus in die Telekommunikationsanlage einprogrammiert. Dabei wird portbezogen vorgegangen, das heißt verschiedene Anschlüsse für Endgeräte erhalten verschiedene Vorgaben für die Tastenbelegung. Das bedeutet, daß auch beim Austausch von Endgeräten an einem Port die Funktionstasten des angeschlossenen Endgerätes immer gleich belegt sind.

Es ist Aufgabe der Erfindung, ein weiteres Verfahren zur Belegung von Funktionstasten anzugeben. Außerdem sollen ein Endgerät, eine Baugruppe und eine Telekommunikationsanlage angegeben werden, die für die Durchführung des Verfahrens geeignet sind.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Der Erfindung liegt die Erkenntnis zugrunde, daß ein Endgerät auch mit veränderten Bedeutungen für die Anzeigeelemente auf einfache Art angeschlossen werden kann, wenn nicht portbezogen programmiert wird, d.h. keine starre Zuordnung zwischen Endgerät und Port besteht. Deshalb wird bei der Erfindung im Endgerät die zum Anzeigeelement gehörende Bedienfunktion vermerkt, so daß endgerätbezogen programmiert werden kann, d.h. es ist eine dynamische Zuweisung eines Endgerätes zu einem Port möglich. Die zum Anzeigeelement gehörende Bedienfunktion wird beim Anschließen des Endgerätes an die Telekommunikationsanlage übermittelt und dort gespeichert. Die an den Endgeräten vorgegebenen Bedeutungen der Anzeigeelemente gelangen beim Anschließen der Endgeräte zur Telekommunikationsanlage und sind somit wieder zentral verfügbar. Die bisherigen Funktionen der Telekommunikationsanlage beim Weiterleiten von Meldungen an die Anzeigeelemente können deshalb beibehalten werden. Das erfindungsgemäße Verfahren wird insbesondere bei Endgeräten verwendet, die von verschiedenen Orten aus an die Telekommunikationsanlage angeschlossen werden, sogenannte 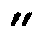 mobile" Engeräte.

Bei einer Weiterbildung der Erfindung gibt es zu jedem Anzeigeelement eine zugeordnete Schaltfläche, die beim Nutzen der Bedienfunktion betätigt wird. Bei der Weiterbildung wird mit Hilfe der Schaltflächen auf die Anzeigeelemente Bezug genommen. Beim Speichern der Zuordnung und beim Übermitteln der Zuordnung an die Telekommunikationsanlage müssen nur die Kennzeichen der Tasten angegeben werden.

Bei einer Ausgestaltung der Erfindung besteht die Bedienfunktion in der Zuordnung der Rufnummer eines Endgerätes im durchschaltevermittelten Telekommunikationsnetz zu einer Schaltfläche. Solche Zuordnungen ermöglichen es, durch Drükken einer Taste den Ruf zu einem Teilnehmer zu aktivieren, dessen Rufnummer der Taste zugeordnet ist, z.B. bei selektiver Rufannahme oder einer Rufübernahme (call picking). Die mit Hilfe des Anzeigeelementes anzuzeigenden Zustände sind die Verbindungszustände des betreffenden Endgerätes. Auf einfache Art ist so am Anzeigeelement erkennbar, ob das Endgerät des B-Teilnehmers besetzt ist, gerufen wird oder in einer Wartestellung beim sogenannten Makeln gehalten wird. Weiterhin werden Amtsleitungen, die zu einer Vermittlungsstelle des öffentlichen Telekommunikationsnetzes führen, oder Leistungsmerkmale bestimmten Funktionstasten zugeordnet.

Bei einer anderen Ausgestaltung wird das Übermitteln der zum Anzeigeelement gehörenden Bedienfunktion vom Endgerät aus gesteuert. Dadurch können auch Endgeräte an die Telekommunikationsanlage angeschlossen werden, die für den Anschluß an die Telekommunikationsanlage ursprünglich nicht vorgesehen waren.

Das erfindungsgemäße Verfahren läßt sich bei der Zuordnung der Rufnummer zu einer Schaltfläche einsetzen. Es wird erreicht, daß dem Teilnehmer die gewohnte Funktionalität zur Verfügung steht, auch wenn die Bedeutung der Schaltflächen und damit auch die Bedeutung der Anzeigeflächen nicht zentral in der Telekommunikationsanlage sondern lokal am Endgerät vorgegeben werden.

Durch den Einsatz des erfindungsgemäßen Verfahrens wird außerdem erreicht, daß die Endgeräte unabhängig vom Port eingerichtet werden können. Dies gibt die Möglichkeit, Endgeräte abhängig vom Standort mit unterschiedlichen Funktionstasten zu nutzen. Beispielsweise kann auf einem Rechner am Arbeitsplatz 1 eine andere Belegung der Funktionstasten verwendet werden als auf einem Rechner an einem Arbeitsplatz 2 (Heimarbeitsplatz). Obwohl beide Rechner über die gleiche Netzwerkkarte mit der Telekommunikationsanlage verbunden sind, stehen dem Mitarbeiter im Betrieb und zu Hause verschiedene Funktionstastenbelegungen zur Verfügung.

Weiterhin ermöglicht es, daß erfindungsgemäße Verfahren, sehr viele Funktionstasten zu verwenden. Beim bekannten Verfahren ist die Zahl der Funktionstasten meist durch den Aufbau der Telekommunikationsanlage und die maximale Anzahl der an die Endgeräte anschließbaren Konsolen mit Funktionstasten vorgegeben. Beim erfindungsgemäßen Verfahren ist die Anzahl der Funktionstasten dagegen nur durch die Speicherkapazität auf der Netzwerkkarte begrenzt. Die Speicherkapazität der Netzwerkkarte ermöglicht es, erheblich mehr Funktionstasten als bisher üblich zu verwenden. Beispielsweise sind 200 Funktionstasten durch das erfindungsgemäße Verfahren verwendbar, während herkömmliche Endgeräte nur max. 72 Funktionstasten bei Benutzung von vier Konsolen (Beistellgeräte) haben.

Bei einer nächsten Weiterbildung überträgt das Endgerät Daten auf der Basis von Datenpaketen in einem Datennetz. An die Telekommunikationsanlage wird ein solches Endgerät mit Hilfe einer Netzwerkkarte angeschlossen. Dem Endgerät ist eine Adresse zugeordnet, unter der es im Datennetz erreichbar ist. Außerdem hat das Endgerät eine Rufnummer, unter der es von der Telekommunikationsanlage aus erreichbar ist. Damit kann das Endgerät ein Rechner sein, in welchem ein Mikroprozessor die Befehle eines gespeicherten Programms abarbeitet. Zur Spracheingabe und Sprachausgabe gibt es im Endgerät eine Spracheinheit. Die Sprachsignale werden in Sprachdaten umgewandelt und dann auf Datenpakete aufgeteilt, z.B. nach dem Standard H.323 der ITU (international telecommunication union). In der anderen Richtung werden vom Endgerät empfangene Datenpakete ausgewertet und die darin enthaltenen Sprachdaten werden in Sprachsignale umgewandelt und an einem Lautsprecher ausgegeben. Die Anzeigeelemente sind bei Endgeräten in einem Datennetz meist als Elemente einer grafischen Benutzeroberfläche gestaltet und werden auf einem Bildschirm angezeigt. Ebenso sind die Schaltflächen Bedienelemente einer grafischen Benutzeroberfläche, die mit Hilfe einer Computermaus bzw. mit Hilfe der Tastatur betätigt werden.

Bei einer grafischen Benutzeroberfläche lassen sich durch den Benutzer im Vergleich zu herkömmlichen Endgeräten eine Vielzahl von Schaltflächen und Anzeigeelementen vorgeben. Der damit verbundene Zeitaufwand wird allein durch den Benutzer bestimmt.

Bei einer anderen Ausgestaltung der Erfindung wird beim Übermitteln der für das Anzeigeelement gespeicherten Bedienfunktion die Adresse des Endgerätes, ein Kennzeichen für die zugeordnete Schaltfläche und eine Rufnummer eines anderen Endgerätes an die Telekommunikationsanlage übermittelt. Die Telekommunikationsanlage ermittelt an Hand der Rufnummer ein Schnittstellenkennzeichen, das an die Netzwerkkarte übertragen wird. Das Schnittstellenkennzeichen wird in der Netzwerkkarte anstelle der Rufnummer verwendet. Durch diese Maßnahme kann die Telekommunikationsanlage beim Steuern der Netzwerkkarte auf die Schnittstellenkennzeichen Bezug nehmen. Die Abläufe in der Telekommunikationsanlage vereinfachen sich, weil die Schnittstellenkennzeichen einfacher als die dazugehörigen Rufnummern zu ermitteln sind. Bei der Ausgestaltung der Erfindung sind trotz der endgerätebezogene Vorgaben für die Belegung der Funktionstasten portbezogene Steuervorgänge der Telekommunikationsanlage einsetzbar.

Wird auf der Netzwerkkarte eine Tabelle erzeugt, in welcher den Schnittstellenkennzeichen Rechneradressen und Tastenkennzeichen zugeordnet sind, so vereinfachen sich Suchprozesse, bei denen ermittelt wird, welcher Rechner Anzeigeelemente hat, die durch eine Meldung mit Bezug auf ein bestimmtes Schnittstellenkennzeichen betroffen sind. Diese Rechneradressen und Schaltflächenkennzeichen können der Tabelle auf einfache Art entnommen werden.

Bei einer Weiterentwicklung der Erfindung wird ein zweites Endgerät für die durchschaltevermittelte Sprachübertragung wie bisher über eine Endgerätebaugruppe mit verschiedenen Anschlüssen für verschiedene Endgeräte an die Telekommunikationsanlage angeschlossen. Das zweite Endgerät ist ein Endgerät, für das die Telekommunikationsanlage ursprünglich vorgesehen war. Somit können an die Telekommunikationsanlage sowohl Endgeräte für die durchschaltevermittelte Sprachübertragung als auch andere Endgeräte angeschlossen werden, z.B. Endgeräte für den Betrieb in einem Datenübertragungsnetz. Für den Nutzer eines Endgerätes im Datennetz ist nicht sichtbar, ob Endgeräte mit anderen Rufnummern ebenfalls im Datennetz betrieben werden oder mit Hilfe der Endgerätebaugruppe an die Telekommunikationsanlage angeschlossen sind.

Für die mit Hilfe der Endgerätebaugruppe angeschlossenen Endgeräte wird bei einer Weiterbildung wie bisher im Speicher der Telekommunikationsanlage eine Tabelle gespeichert, in der den Schnittstellenkennzeichen jeweils die Schnittstellenkennzeichen anderer Geräte und Tastenkennzeichen zugeordnet sind. Die Tabelle wird bei der Inbetriebnahme der Telekommunikationsanlage aus dem Speicher der Telekommunikationsanlage in einen Speicher auf der Endgerätebaugruppe übertragen. Durch diese Maßnahme wird für die mit Hilfe der Endgerätebaugruppe angeschlossenen Endgeräte das übliche Verfahren zur Belegung von Funktionstasten verwendet. Dieses Verfahren hat sich für solche Endgeräte bewährt, weil diese Endgeräte meist ortsfest betrieben werden und somit die Zuordnung zu einer Schnittstelle bzw. zu einem Port dauerhaft ist. Die Endgeräte lassen sich bei Verwendung des üblichen Verfahrens einfacher aufbauen. Nur für die Endgeräte im Datennetz wird das erfindungsgemäße Verfahren beim Anschließen verwendet. Der dadurch entstehende Aufwand ist gerechtfertigt, weil Endgeräte in einem Datenübertragungsnetz andere Anforderungen erfüllen müssen als Endgeräte, die direkt an die Telekommunikationsanlage angeschlossen sind. So können mehrere Rechner im Datennetz die gleiche Rufnummer haben. Dies ist beispielsweise bei Mitarbeitern der Fall, die einen Heimarbeitsplatz und einen Arbeitsplatz in der Firma haben. Beide Rechner können beim Verwenden des erfindungsgemäßen Verfahrens unterschiedliche Benutzungsoberflächen mit unterschiedlichen Schaltflächen und verschiedenen Bedeutungen für die Anzeigeelemente haben. Beim Anmelden am Datenübertragungsnetz wird der Netzwerkkarte in der Telekommunikationsanlage die jeweilige Tastenbelegung mitgeteilt. So kann der Mitarbeiter die Tastenbelegung den Gegebenheiten anpassen und beispielsweise am Arbeitsplatz Funktionstasten für Leitungen zu Endgeräten von Kollegen weglassen, zu denen er Sichtkontakt hat.

Bei einer Weiterbildung des erfindungsgemäßen Verfahrens erzeugt die Telekommunikationsanlage Meldungen, in welchen anzuzeigende Zustände von Bedienfunktionen vermerkt sind. An Hand der in der Telekommunikationsanlage für das Anzeigeelement gespeicherten Bedienfunktionen wird das Anzeigeelement ermittelt, welches den in der Meldung vermerkten Zustand anzeigt. Anschließend wird das ermittelte Anzeigeelement im Endgerät gemäß dem vermerkten Zustand angesteuert. Das Verwenden von Meldungen ist eine einfache Möglichkeit, um Zustandsänderungen einer nicht bekannten Anzahl von Endgeräten bekanntzugeben. Beim Verwenden von Meldungen muß außerdem der Steuerung der Telekommunikationsanlage nicht bekannt sein, welche Endgeräte welche Anzeigeelemente haben.

Bei einer Ausgestaltung enthalten die von der Telekommunikationsanlage erzeugten Meldungen für die Bedienfunktionen, bei denen Rufnummern und Schaltflächen zugeordnet sind, jeweils ein Schnittstellenkennzeichen. An Hand des Schnittstellenkennzeichens werden die Meldungen an die Endgeräte weitergeleitet. Die Telekommunikationsanlage muß im Vergleich zu üblichen Telekommunikationsanlagen bezüglich der Meldungen nicht verändert werden. Trotzdem können Meldungen an bisher verwendete Endgeräte und auch an Endgeräte in einem Datennetz weitergeleitet werden.

Die Erfindung betrifft außerdem ein Endgerät, eine Baugruppe und eine Telekommunikationsanlage, die für die Durchführen des erfindungsgemäßen Verfahrens bzw. dessen Weiterbildungen geeignet sind.

Im folgenden werden Weiterbildungen der Erfindung an Hand der beiliegenden Zeichnungen erläutert. Darin zeigen:
- Figur 1: eine Telekommunikationsanlage mit Endgeräten in einem Datennetz,
- Figur 2: den Aufbau der Telekommunikationsanlage, und
- Figur 3: ein Flußdiagramm mit beim Anschließen eines Endgerätes auszuführenden Verfahrensschritten.

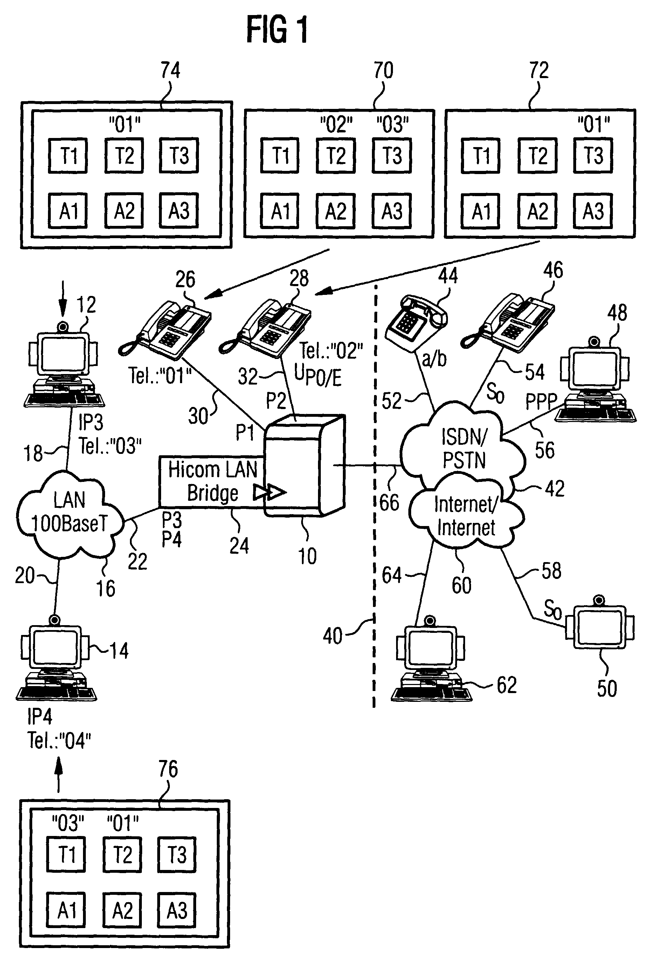

Figur 1 zeigt eine Telekommunikationsanlage 10, an die Rechner 12, 14 eines Datennetzes 16 angeschlossen sind. Die Telekommunikationsanlage 10 ist eine HICOM-Anlage der Firma SIEMENS AG. Das Datennetz 16 ist ein lokales Datennetz, das englisch auch als local area network (LAN) bezeichnet wird. Das Datennetz 16 ist auch über das Internet erreichbar. Die physikalische Grundlage des Datennetzes 16 wird durch ein sogenanntes Ethernet gebildet, das gemäß Standard IEEE 802.3 arbeitet (Institute of Electrical and Electronic Engineers Inc.). Die Datenübertragungsrate im Datennetz 10 beträgt beispielsweise 100 Mbit/s (hundert Megabits pro Sekunde). Die Rechner 12 und 14 sind handelsübliche Personalcomputer mit Spracheinheiten, sogenannten Soundkarten, Lautsprechern und mit Mikrofonen zur Spracheingabe. Der Rechner 12 bzw. 14 ist über eine Leitung 18 bzw. 20 mit dem Datennetz 16 verbunden.

Der Rechner 12 ist im Datennetz 16 unter einer Adresse IP3 erreichbar. Außerdem hat der Rechner 12 eine Rufnummer "03", unter der er von der Telekommunikationsanlage 10 aus erreichbar ist. Der Rechner 14 hat eine Datennetzadresse IP4 und eine Rufnummer "04".

An die Telekommunikationsanlage 10 sind außerdem eine Vielzahl von Endgeräten direkt angeschlossen, d.h. ohne zwischengeschaltetes Datennetz. Von diesen Endgeräten sind in Fig. 1 zwei Telefone 26 und 28 dargestellt. Das Telefon 26 ist über eine Leitung 30 und das Telefon 28 über eine Leitung 32 an die Telekommunikationsanlage 10 angeschlossen. Die Sprachdaten und Signalisierungsdaten werden auf den Leitungen 30 und 32 gemäß einem Protokoll UP0/E übertragen, das der Hersteller der Telekommunikationsanlage 10 festgelegt hat. Das Telefon 26 ist an einer Schnittstelle P1 der Telekommunikationsanlage 10 angeschlossen und hat die Rufnummer "01". Das Telefon 28 ist an einer Schnittstelle P2 der Telekommunikationsanlage 10 angeschlossen und hat die Rufnummer "02".

Die bisher erläuterten Elemente 10 bis 32 befinden sich innerhalb des Privatgeländes einer Firma. Eine gestrichelte Linie 40 verdeutlicht die Grenze zu einem öffentlichen Telekommunikationsnetz 42, beispielsweise zum Fernsprechnetz der Firma TELEKOM AG. An das Fernsprechnetz 42 sind eine Vielzahl von Endgeräten angeschlossen, von denen in Fig. 1 ein analog arbeitendes Telefon 44, ein ISDN-Telefon 46 (Integrate Services Digital Network), ein Rechner 48 und ein sogenanntes H.320-Terminal 50 dargestellt sind. Das Telefon 44 ist über eine Leitung 52 mit einer nicht dargestellten Ortsvermittlungsstelle des Telekommunikationsnetzes 52 verbunden. Eine Leitung 54 dient zum Anschluß des ISDN-Telefons 46 an das Telekommunikationsnetz 42. Der Rechner 48 ist ein handelsüblicher Personalcomputer mit Spracheinheit. Eine Leitung 56 verbindet den Rechner 48 mit dem Telekommunikationsnetz 42. Beim Verbindungsaufbau zwischen Telekommunikationsnetz 42 und Rechner 48 wird ein Netzzugangsrechner verwendet (nicht dargestellt), zu dem eine Punkt zu Punkt Verbindung aufgebaut wird. Auf der Leitung 56 werden gemäß einem Protokoll PPP für Punkt zu Punkt Verbindungen Daten übertragen (PPP-Point-to-Point-Protocol).

Das H.320-Terminal 50 arbeitet gemäß ITU-T-Standard H.320 (International Telecommunication Union - Telecommunication) als ISDN-Terminal. Über eine Leitung 58 ist das Terminal 50 mit dem Telekommunikationsnetz 42 verbunden.

Das Telekommunikationsnetz 42 ist außerdem über Netzzugangseinrichtungen mit mehreren anderen Telekommunikationsnetzen verbunden, von denen in Fig. 1 das Internetz 60 dargestellt ist, in dem Daten gemäß Internet Protokoll übertragen werden. Von den am Internetz 60 betriebenen Endgeräten ist in Fig. 1 ein Rechner 62 dargestellt, der über eine Leitung 64 mit dem Internetz 60 verbunden ist. Die Telekommunikationsanlage 10 ist am öffentlichen Telekommunikationsnetz 42 über eine Leitung 66 angeschlossen.

Weiterhin sind in Fig. 1 ein Bedienfeldausschnitt 70 des Telefons 26, ein Bedienfeldausschnitt 72 des Telefons 28, ein Bedienfeldausschnitt 74 des Rechners 12 und ein Bedienfeldausschnitt 76 des Rechners 14 dargestellt. Die Bedienfeldausschnitte 70 bis 76 haben jeweils drei Tasten T1 bis T3 und drei Anzeigeelemente A1 bis A3. Die Tasten T1 bis T3 der Bedienfelder 70 und 72 enthalten jeweils einen Mikrotaster. Die Anzeigeelemente A1 bis A3 der Bedienfeldausschnitte 70 und 72 sind Leuchtdioden. Der Bedienfeldausschnitt 74 bzw. der Bedienfeldausschnitt 76 werden auf dem Bildschirm des Rechners 12 bzw. des Rechners 14 dargestellt. Die Tasten T1 bis T3 sowie die Anzeigeelemente A1 bis A3 in den Bildfeldausschnitten 74 und 76 sind als Elemente einer grafischen Benutzeroberfläche gestaltet.

Am Telefon 26 ist der Taste T2 die Rufnummer "02" des Telefons 28 zugeordnet. Das unter der Taste T2 liegende Anzeigeelement A2 zeigt den Zustand des Endgerätes 28 an. Der Taste T3 im Bedienfeldausschnitt 70 ist die Rufnummer "03" zugeordnet, d.h. die Rufnummer des Rechners 12. Das unterhalb der Taste T3 liegende Anzeigeelement A3 dient zur Anzeige des Verbindungszustandes des Rechners 12.

Im Bedienfeld 72 ist nur die Taste T3 mit der Rufnummer "01" des Telefons 26 belegt. Das unterhalb der Taste T3 liegende Anzeigeelement A3 im Bedienfeldausschnitt 72 dient zur Anzeige des Verbindungszustandes des Telefons 26.

Im Bedienfeldausschnitt 74 ist ebenfalls nur eine Taste belegt. Die Taste T2 ist mit der Rufnummer "01" des Telefons 26 belegt. Das darunterliegende Anzeigeelement A2 dient der Anzeige des Verbindungszustandes des Telefons 26.

Die Taste T1 im Bedienfeldausschnitt 76 ist mit der Rufnummer "03" des Rechners 12 belegt. Das unterhalb der Taste T1 angeordnete Anzeigeelement A1 dient der Anzeige des Verbindungszustandes des Rechners 12. Der Taste T2 im Bedienfeldausschnitt 76 ist die Rufnummer "01" des Telefons 26 zugeordnet. Das darunterliegende Anzeigeelement A2 dient der Anzeige des Verbindungszustandes des Telefons 26.

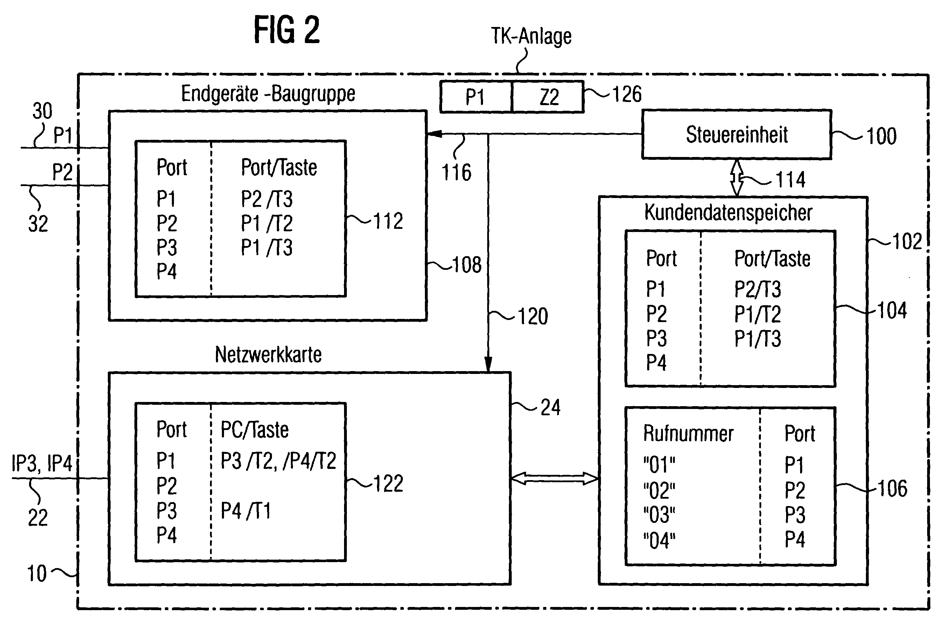

Figur 2 zeigt den Aufbau der Telekommunikationsanlage 10, welche eine zentrale Steuereinheit 100 enthält. Die Steuereinheit 100 steuert zentrale Vermittlungs- und Signalisierungsvorgänge in der Telekommunikationsanlage 10. Dabei greift die Steuereinheit 100 auf eine Speichereinheit 102 zu, in der Befehle für einen Mikroprozessor (nicht dargestellt) der Steuereinheit 100 gespeichert sind. Außerdem sind in der Speichereinheit 102 zwei Tabellen 104 und 106 eines Kundendatenspeichers gespeichert, deren Bedeutung weiter unten erläutert wird.

Die Telekommunikationsanlage 10 enthält außerdem eine Endgerätebaugruppe 108, an der die Leitungen 30 und 32 zum Anschluß der Telefone 26 und 28 angeschlossen sind. Eine Netzwerkkarte 24 ist die Brücke zwischen der Telekommunikationsanlage 10 und dem Datennetz 16. Die Leitung 22 führt direkt zur Netzwerkkarte 24. Weitere Einheiten der Telekommunikationsanlage 10 wurden nicht dargestellt, z.B. ein Koppelfeld zum Vermitteln von Verbindungen.

Vor der Erstinbetriebnahme wird die Tabelle 104 entweder von einem Wartungstechniker in die Speichereinheit 102 eingegeben oder es wird ein Default angenommen. Die Tabelle 104 kann auch über Tastenprogrammierung von den Telefonen 26 und 28 aus individuell generiert/geändert werden. Die Tabelle 104 enthält eine Zuordnung bestimmter Bedienfunktionen zu Tasten bzw. Anzeigeelementen in den Bedienfeldern 70 und 72. Anstelle von Rufnummern werden Schnittstellenkennzeichen verwendet. So ist die Schnittstelle P1 bzw. die Rufnummer "01" bei dem an der Schnittstelle P2 angeschlossenen Telefon 28 der Taste T3 des Bedienfeldes 72 zugeordnet, vgl. erste Zeile der Tabelle 104. Die Schnittstelle P2 bzw. die Rufnummer "02" ist der Taste T2 des an der Schnittstelle P1 angeschlossenen Telefons 26 zugeordnet, vgl. zweite Zeile der Tabelle 104. Die Schnittstelle P3 bzw. die Rufnummer "03" ist die Taste T3 des an der Schnittstelle P1 angeschlossenen Telefons 26 zugeordnet, vgl. dritte Zeile der Tabelle 104. Bei der Inbetriebnahme der Telekommunikationsanlage 10 werden die Daten der Tabelle 104 von der Steuereinheit 100 zur Endgerätebaugruppe 108 übertragen und dort in einem Speicher als Tabelle 112 gespeichert, vgl. Pfeile 114 und 116.

Auf der Netzwerkkarte 24 befindet sich ein nicht dargestellter Prozessor, der in einem Speicher der Netzwerkkarte 24 gespeicherte Befehle abarbeitet. Sobald der Rechner 12 beim Ausführen eines Programmes zu Sprachkommunikation seinen Betrieb im Datennetz 16 aufnimmt, werden vom Rechner 12 zur Netzwerkkarte 24 Daten zur Tastenbelegung im Bedienfeldausschnitt 74 übertragen und im Speicher der Netzwerkkarte 24 für die weitere Bearbeitung gespeichert. Da nur eine Taste im Bedienfeldausschnitt 74 belegt ist, wird übermittelt, daß die Taste T2 im Rechner 12, d.h. im Rechner mit der IP3, mit der Rufnummer "01" belegt ist.

Der Prozessor der Netzwerkkarte 24 ermittelt mit Hilfe der Steuereinheit 100 das zur Rufnummer "01" gehörende Schnittstellenkennzeichen. Dabei greift die Steuereinheit 100 auf die Tabelle 106 des Kundendatenspeichers in der Speichereinheit 102 zu. In der Tabelle 106 sind die Rufnummern "01" bis "04" vermerkt. Außerdem kann das der betreffenden Rufnummer "01" bis "04" zugeordnete Schnittstellenkennzeichen ermittelt werden. Während die Schnittstellenkennzeichen P1 und P2 durch den Anschluß der Telefone 26 bzw. 28 an die Anschlußbaugruppe festgelegt werden, sind die Schnittstellenkennzeichen P3 und P4 für die Rechner 12 und 14 dem Steckplatz der Netzwerkkarte 24 zugeordnet. Es ist auch eine andere Zuordnung von Schnittstellen P1 bis P4 zu den Steckplätzen möglich. Das zur Rufnummer "01" gehörende Schnittstellenkennzeichen P1 wird von der Steuereinheit 100 gelesen und an die Netzwerkkarte 24 übermittelt, vgl. Pfeile 114 und 120. Das Schnittstellenkennzeichen P1 wird ebenfalls auf der Netzwerkkarte 24 für die weitere Bearbeitung gespeichert.

Anschließend erzeugt der Prozessor der Netzwerkkarte 24 aus den vorbereiteten Daten eine Zuordnungstabelle 122, die im Speicher der Netzwerkkarte gespeichert wird. Die Zuordnungstabelle 122 ist ähnlich wie die Tabellen 104 und 112 aufgebaut. Für jede Schnittstelle P1 bis P4 wird in der Zuordnungstabelle 122 angegeben, welche Rechner 12, 14 im Datennetz 16 Tasten T1 bis T3 für die den Schnittstellen zugeordneten Rufnummern haben. Ist nur der Rechner 12 am Datennetz 16 in Betrieb, so enthält die Zuordnungstabelle 122 nur einen Eintrag in der ersten Zeile.

Nimmt der Rechner 14 Verbindung zum Datennetz 16 auf, so sendet er ebenfalls an die Netzwerkkarte Daten, welche die Tastenbelegung betreffen. Zunächst wird übermittelt, daß der Taste T1 im Bedienfeldausschnitt 76 die Rufnummer "03" zugeordnet ist. Anschließend wird mitgeteilt, daß die Taste T2 der Rufnummer "01" zugeordnet ist.

Nachdem der Prozessor der Netzwerkkarte 24 die vom Rechner 14 übermittelten Daten im Speicher der Netzwerkkarte gespeichert hat, ermittelt er, wie oben bereits für die vom Rechner 12 gesendeten Daten erläutert, mit Hilfe der Steuereinheit 100 und der Tabelle 106 die zu den übermittelten Rufnummern gehörenden Schnittstellenkennzeichen. Diese Schnittstellenkennzeichen werden auf der Netzwerkkarte 24 gespeichert. So gehört zur Rufnummer "03" die Schnittstelle P3. Zur Rufnummer "01" gehört die Schnittstelle P1.

Anschließend werden aus den neuen Daten weitere Einträge für die Zuordnungstabelle 122 erzeugt. In der ersten Zeile der Zuordnungstabelle 122 wird vermerkt, daß der Rechner 14 mit der Adresse IP4 eine Taste T2 hat, der die Rufnummer "01" bzw. die Schnittstelle P1 zugeordnet ist. Weiterhin wird in der dritten Zeile der Tabelle 122 vermerkt, daß der Rechner 14 mit der Adresse IP4 eine Taste T1 hat, der die Schnittstelle P3 zugeordnet ist. In der zweiten und vierten Zeile gibt es keine Einträge für die Schnittstelle P3 bzw. P4.

Während des Betriebs der Telekommunikationsanlage 10 sendet die Steuereinheit 100 auf die bekannte Art und Weise abhängig von den vorgenommenen Schaltvorgängen Meldungen an die Endgerätebaugruppe 108, vgl. Pfeil 116. Zusätzlich werden jedoch diese Meldungen auch an die Netzwerkkarte 24 gesendet, vgl. Pfeil 120. Beispielsweise wird eine Meldung 126 erzeugt, wenn vom Telefon 26 aus eine Verbindung zu einem anderen Teilnehmer aufgebaut worden ist. Die Meldung 126 enthält ein Kennzeichen für die Schnittstelle P1, d.h. für den Anschluß, an welchem das Telefon 26 angeschlossen ist. Außerdem enthält die Meldung 126 einen Zustandswert Z2, der angibt, daß eine Verbindung aufgebaut worden ist. Sobald die Endgerätebaugruppe 108 die Meldung 126 empfängt, wird die Meldung auf folgende Art und Weise bearbeitet. Dabei wird die Tabelle 112 verwendet. Mit Hilfe der ersten Zeile der Tabelle 112 wird ermittelt, daß das der Taste T3 zugeordnete Anzeigeelement A3 des an der Schnittstelle P2 angeschlossenen Telefons 28 so angesteuert werden muß, daß sie den in der Meldung 126 angegebenen Zustandswert Z2 anzeigt. Die Endgerätebaugruppe 108 signalisiert dies dem Telefon 28 über die Leitung 32. Am Telefon 28 wird das der Taste T3 zugeordnete Anzeigeelement A3 eingeschaltet.

In der Netzwerkkarte 24 wird die Meldung 126 ebenfalls empfangen und bearbeitet. Dabei wird mit Hilfe der Zuordnungstabelle 122 ermittelt, daß bei Meldungen, welche die Schnittstelle P1 betreffen, die beiden Rechner 12 und 14 mit den Adressen IP3 und IP4 zu benachrichtigen sind. Die Netzwerkkarte 24 signalisiert dem Rechner 12 über die Leitung 22, daß das der Taste T2 des Bedienfeldausschnittes 74 zugeordnete Anzeigeelement A3 im eingeschalteten Zustand darzustellen ist. Dem Rechner 14 wird von der Netzwerkkarte 24 ebenfalls über die Leitung 22 signalisiert, daß im Bedienfeldausschnitt 76 das der Taste T2 zugeordnete Anzeigeelement A2 ebenfalls im eingeschalteten Zustand darzustellen ist.

Somit können die Benutzer des Telefons 28 sowie der Rechner 12 und 14 auf den Bedienfeldausschnitten 72, 74 bzw. 76 erkennen, daß der das Telefon 26 nutzende Teilnehmer mit der Rufnummer "01" gerade ein Gespräch führt. Über eine wie die Meldung 126 aufgebaute Meldung jedoch mit anderer Zustandsinformation benachrichtigt die Steuereinheit 100 beim Verbindungsabbau des vom Telefon 26 ausgeführten Gesprächs die Endgerätebaugruppe 108 und die Netzwerkkarte 24. Nach dem Bearbeiten dieser Meldungen werden die Anzeigeelemente A3 im Bedienfeldausschnitt 72, A2 im Bedienfeldausschnitt 74 und A2 im Bedienfeldausschnitt 76 wieder ausgeschaltet.

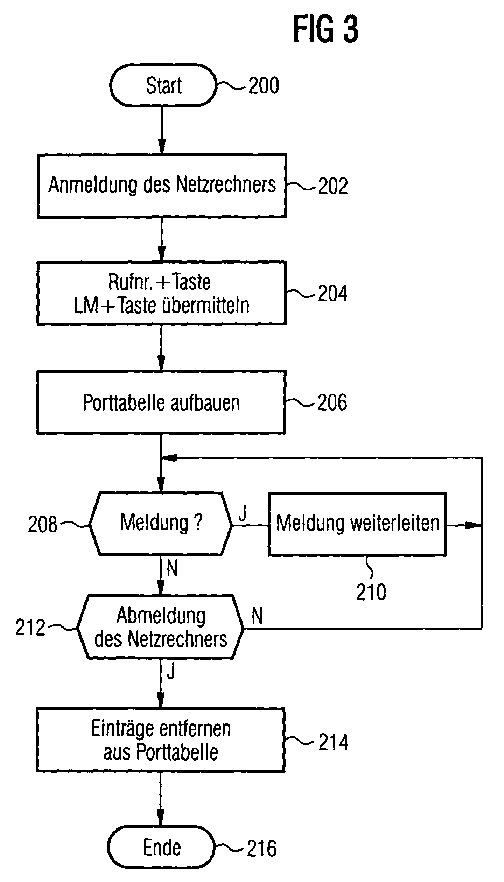

Figur 3 zeigt ein Flußdiagramm mit den beim Anschließen des Rechners 12 ausgeführten Verfahrensschritten. Das Verfahren beginnt in einem Verfahrensschritt 200. In einem ersten Verfahrensschritt 202 meldet sich das auf dem Rechner 12 ausgeführte Kommunikationsprogramm bei der Netzwerkkarte 24 an. Beim Anschließen des Rechners 12 wird das Kommunikationsprogramm und die Telekommunikationsanlage synchronisiert. Es werden Informationen über den aktuellen Zustand des Kommunikationsprogramms, über Leistungsmerkmale und die Zustände dieser Leistungsmerkmale ausgetauscht. In einem folgenden Verfahrensschritt 204 sendet der Rechner 12 die Daten der Tabelle 118 an die Netzwerkkarte 24.

In einem nächsten Verfahrensschritt 206 erzeugt der Prozessor der Netzwerkkarte 24 aus den Daten der Tabelle 118 Einträge in der Zuordnungstabelle 122. Liegt zum Zeitpunkt des Ausführens eines Verfahrensschrittes 208 eine Meldung von der Steuereinheit 100 vor, so wird diese in einem folgenden Verfahrensschritt 210 bearbeitet. Die Bearbeitung erfolgt durch den Prozessor der Netzwerkkarte 24 wie oben an Hand der Figur 2 erläutert. Danach wird die Bearbeitung wieder im Verfahrensschritt 208 fortgesetzt. Wird im Verfahrensschritt 208 festgestellt, daß keine zu bearbeitende Meldung vorliegt, so folgt unmittelbar nach dem Verfahrensschritt 208 ein Verfahrensschritt 212. Im Verfahrensschritt 212 wird geprüft, ob die Netzwerkkarte 24 vom Rechner 12 eine Abmeldenachricht empfangen hat. Ist dies nicht der Fall, so wird das Verfahren im Verfahrensschritt 208 fortgesetzt. Andernfalls werden in einem auf den Verfahrensschritt 212 folgenden Verfahrensschritt 214 sämtliche Einträge aus der Zuordnungstabelle 122 entfernt, die sich auf den Rechner 12 mit der Adresse IP3 beziehen. In einem Verfahrensschritt 216 wird das Verfahren dann beendet.

## Patentansprüche

1. Verfahren zum Anschließen eines Endgerätes (12) an eine Telekommunikationsanlage (10),
bei dem ein Endgerät (12) mindestens ein Anzeigeelement (A2) zum Anzeigen der Zustände (Z2) einer Bedienfunktion hat, im Endgerät (12) die zum Anzeigeelement (A2) gehörende Bedienfunktion vermerkt ist,
das Endgerät (12) an eine Telekommunikationsanlage (10) zum Vermitteln von Verbindungen zwischen Teilnehmern in einem durchschaltevermittelten Telekommunikationsnetz angeschlossen wird (Schritt 102),
und bei dem die zum Anzeigeelement (A2) gehörende Bedienfunktion beim Anschließen des Endgerätes (12) an die Telekommunikationsanlage (10) übermittelt und dort gespeichert wird (Schritte 104, 106).

2. Verfahren nach Anspruch 1,
**dadurch gekennzeichnet,**
daß dem Anzeigeelement (A2) eine Schaltfläche (T2) des Endgerätes (12) zugeordnet ist, die beim Nutzen der Bedienfunktion betätigt wird,
und daß mit Hilfe der Schaltfläche (T2) auf das Anzeigeelement (A2) Bezug genommen wird.

3. Verfahren nach Anspruch 2,
**dadurch gekennzeichnet,**
daß die Bedienfunktion die Zuordnung der Rufnummer ("01") eines anderen Endgerätes (26) in dem durchschaltevermittelten Telekommunikationsnetz oder eines Leitungszugangs zum Telekommunikationsnetz zu einer Schaltfläche (T2) ist,
und daß die Zustände (Z2) Verbindungszustände des anderen Endgerätes (14, 26) oder des Leitungszugangs sind.

4. Verfahren nach einem der vorhergehenden Ansprüche 3,
**dadurch gekennzeichnet,**
daß das Übermitteln der zum Anzeigeelement gehörenden Bedienfunktion vom Endgerät (12) gesteuert wird.

5. Verfahren nach einem der vorhergehenden Ansprüche,
**dadurch gekennzeichnet,**
daß das Endgerät (12) Daten auf der Basis von Datenpaketen in einem Datennetz (16) überträgt,
das Endgerät (12) an die Telekommunikationsanlage (10) mit Hilfe einer Netzwerkkarte (110) angeschlossen ist,
dem Endgerät (12) eine Adresse (IP3) zugeordnet ist, unter der es im Datennetz (16) erreichbar ist,
und daß dem Endgerät (12) eine Rufnummer ("03") zugeordnet ist, unter der es von der Telekommunikationsanlage (10) aus erreichbar ist.

6. Verfahren nach Anspruch 5,
**dadurch gekennzeichnet,**
daß beim Übermitteln der für das Anzeigeelement (A2) gespeicherten Bedienfunktion die Adresse (IP3) des Endgerätes (12), ein Kennzeichen für die zugeordnete Schaltfläche (T3) bzw. für das Anzeigeelement (A2) und eine Rufnummer ("01") eines anderen Endgerätes (26) an die Telekommunikationsanlage (10) übermittelt werden,
daß die Telekommunikationsanlage (10) an Hand der Rufnummer ("01") ein Schnittstellenkennzeichen (P1) ermittelt, und an die Netzwerkkarte (110) überträgt,
und daß das Schnittstellenkennzeichen (P1) in der Netzwerkkarte (110) anstelle der Rufnummer ("01") verwendet wird.

7. Verfahren nach Anspruch 5 oder 6,
**dadurch gekennzeichnet,**
daß auf der Netzwerkkarte (110) eine Tabelle (122) erzeugt wird, in welcher dem Schnittstellenkennzeichen (P1) mindestens eine Adresse (IP3) eines anderen Endgerätes (14) des Datennetzes (16) und ein Kennzeichen für eine Schaltfläche (T2) bzw. für ein Anzeigeelement (A2) des anderen Endgerätes zugeordnet sind.

8. Verfahren nach einem der vorhergehenden Ansprüche,
**dadurch gekennzeichnet,**
daß ein weiteres Endgerät (26) für die durchschaltevermittelte Sprachübertragung mit Hilfe einer Endgerätebaugruppe (108) an die Telekommunikationsanlage (10) angeschlossen wird.

9. Verfahren nach Anspruch 8,
**dadurch gekennzeichnet,**
daß im Speicher (102) der Telekommunikationsanlage (10) eine Tabelle (104) gespeichert ist, in der Schnittstellenkennzeichen (P1) jeweils die Schnittstellenkennzeichen (P2) anderer Geräte (28) und Tastenkennzeichen (T3) bzw. Anzeigeelementekennzeichen (A2) zugeordnet sind,
und daß die Tabelle (104) aus dem Speicher (102) der Telekommunikationsanlage (10) bei Inbetriebnahme der Telekommunikationsanlage (10) in einen Speicher auf der Endgerätebaugruppe (112) übertragen wird.

10. Verfahren nach einem der vorhergehenden Ansprüche,
**dadurch gekennzeichnet,**
daß die Telekommunikationsanlage (10) Meldungen (126, 128) erzeugt, in welchen anzuzeigende Zustände (Z1, Z2) von Bedienfunktionen vermerkt sind,
an Hand der in der Telekommunikationsanlage (10) für das Anzeigeelement gespeicherten Bedienfunktion das Anzeigeelement ermittelt wird, welches den in der Meldung (126, 128) vermerkten Zustand (Z1, Z2) anzeigt,
und bei dem das ermittelte Anzeigeelement im Endgerät (12) gemäß dem vermerkten Zustand (Z1, Z2) angesteuert wird.

11. Verfahren nach Anspruch 10,
**dadurch gekennzeichnet,**
daß die von der Telekommunikationsanlage (10) erzeugten Meldungen (126) für Bedienfunktionen, bei denen Rufnummern ("01") und Anzeigeelemente zugeordnet sind, jeweils ein Schnittstellenkennzeichen (P1) enthalten, das dem Weiterleiten der Meldung (126) an das Endgerät (12) dient.

12. Endgerät (12) für den Betrieb an einer Telekommunikationsanlage (10),
mit mindestens einem Anzeigeelement (A2) zum Anzeigen der Zustände (Z2) einer Bedienfunktion,
mit einer Zuordnungseinheit, die dem Anzeigeelement (A2) eine Rufnummer ("01") eines anderen Endgerätes (26) zuordnet, das unter dieser Rufnummer von einer durchschaltevermittelten Telekommunikationsanlage aus erreichbar ist, oder die dem Anzeigeelement (A2) einen Leitungszugang einer durchschaltevermittelten Telekommunikationsanlage (10) zuordnet,
einem Speicher, in welchem die zum Anzeigeelement (A2) gehörende Bedienfunktion gespeichert wird,
und mit einer Übermittlungseinheit, die die zum Anzeigeelement gehörende Bedienfunktion beim Anschließen des Endgerätes (12) zur Telekommunikationsanlage (10) sendet.

13. Baugruppe (24),
mit einem ersten Anschluß (22) für mindestens ein Endgerät (12, 14), das mindestens ein Anzeigeelement (A2) zum Anzeigen des Zustandes (Z2) einer Bedienfunktion hat,
mit einem weiteren Anschluß (120) für die Verbindung zu einer Telekommunikationsanlage (10) zum Vermitteln von Verbindungen zwischen Teilnehmern in einem durchschaltevermittelten Telekommunikationsnetz,
mit einem Speicher zum Speichern einer Zuordnungstabelle (122), in der die zum Anzeigeelement (A2) gehörende Bedienfunktion gespeichert wird,
und mit einem Prozessor, der beim Anschluß des Endgerätes (12) Daten für den Aufbau der Zuordnungstabelle (122) vom Endgerät (12) empfängt und die Zuordnungstabelle (122) aufbaut.

14. Baugruppe (24) nach Anspruch 13,
**dadurch gekennzeichnet,**
daß sie zum Anschluß mindestens eines Endgerätes (12) dient, das in einem Datennetz (16) auf der Basis von Datenpaketen Sprachdaten übermittelt.

15. Telekommunikationsanlage (10),
**gekennzeichnet durch**
eine Baugruppe (24) gemäß Anspruch 13 oder 14.
